# EUROPEAN PATENT SPECIFICATION

(11) **EP 1 694 110 B1**
(45) Date of publication and mention of the grant of the patent: **28.03.2012**
(21) Application number: 04805168.4
(22) Date of filing: 17.12.2004
(51) Int. Cl.: A01C 21/00

(54) **SULFUR FERTILISING METHOD**
SCHWEFELDÜNGUNGSVERFAHREN
METHODE DE FERTILISATION SOUFREE

(30) Priority: 17.12.2003 FI 20031847
(43) Date of publication of application: 30.08.2006
(73) Proprietor: Yara Suomi Oy, 00181 Helsinki (FI)
(72) Inventor: KLEEMOLA, Jouko, FI-05900 Hyvinkää (FI); PELTONEN, Jari, FI-04330 Lahela (FI)
(74) Representative: Saijonmaa, Olli-Pekka
(86) International application number: PCT/FI2004/000773
(87) International publication number: WO 2005/058008

(56) References cited:
- EP-A- 0 813 807
- WO-A-00/34772
- US-A1- 2003 019 152
- US-A1- 2003 101 918
- PATENT ABSTRACTS OF JAPAN vol. 2000, no. 02, 29 February 2000 (2000-02-29) & JP 11 313594 A (OMRON CORP), 16 November 1999 (1999-11-16)

## Description

The present invention relates to a method for optimal fertilisation of cultivated plants and to a system for implementing it.

Balanced plant nutrition safeguards effective production of high-quality foodstuffs and industries based on vegetal raw materials, as well as their capacity to provide for the food supplies of a country. Together with good growth conditions of the fields, balanced plant nutrition creates a good basis for a high crop yield and contributes to efficient utilisation of nutrients provided as a production input, thus reducing the risk of nutrients leaching to the environment, especially to water systems.

Sulphur is an indispensable plant nutrient, which the plant requires at least in the same amount as phosphor. In previous years, sulphur was added to chemical fertiliser compositions only in small amounts, because over several decades, the sulphur deposits caused by acid rains used to meet the sulphur requirement of cultivated plants. Nevertheless, to decrease the environmental impact, emission standards were determined for industries. Restricted emission standards resulted in notably decreased availability of sulphur usable by plants. This is already experienced as an acute problem in Western Europe. The energy production of Great Britain, for instance, is strongly dependent on coal-fuelled power. As the emissions from this line of industry are markedly decreasing, surveys made in the mid 90's already indicated that the availability of plant sulphur gradually dropped in the course of the last decade. At the same time, the sulphur contents in wheat grain samples in Great Britain have continuously decreased. The surveys also indicated that the sulphur content substantiated in grain samples in the early 80's has now dropped and its geographical distribution has changed. Even in strongly industrialised regions, grain samples are no longer notably richer in sulphur compared to other regions. A preliminary, relatively restricted survey of sulphur contents in plant samples from Finland and the Baltic countries implied a similar trend in Finland and its neighbouring regions.

The most alarming observation in the sulphur content surveys is that currently cultivated plants quite obviously suffer from sulphur deficiency on a very large area. This is proved by the ratio nitrogen: sulphur confirmed in the samples, a ratio of above 16:1 being a strong indicator of sulphur deficiency. Although sulphur does not belong to the main nutrients in terms of intake quantities, sulphur deficiency has an exceptionally high impact on the crop yield of cultivated plants. In fact, studies in Great Britain have indicated that sulphur deficiency has reduced wheat yields by one fifth, while the improving effect of sulphur fertilisation on the crop yield has been in the range 30-40% depending on the year. Such a strong reaction in the crop yield may be partly explained by the observation that sulphur deficiency weakens the hydraulic conductibility of the fibro-vascular tissue, thus increasing or even causing dryness stress. Different plant species have varying susceptibility to sulphur deficiency. Thus, for instance, turnip rape cultivated in Finland has exceptional sensitivity because of the sulphurous compounds it produces, which, in turn play a part in the plants' defence reactions against plant vermin. The fading turnip rape crops noted over the last decade in Finland may partly be due to the gradually decreased availability of sulphur.

Sulphur deficiency has also been confirmed to relate distinctly to quality production. However, this is not necessarily a direct result of decreased crop yield capacity, because sulphur interacts intimately with the principal plant nutrient nitrogen. The strongly interacting nitrogen and sulphur metabolic functions of a plant suffering from sulphur deficiency are mutually different compared to a situation where sulphur supply is ascertained. The effect on the protein quality is particularly pronounced. Under sulphur deficiency, sulphurous amino acids are synthesised to a smaller extent, and they are replaced with other amino acids often less valuable in terms of nutrition. Consequently, a plant growing under sulphur deficiency not only produces a lower crop yield, but the crop quality is also markedly poorer, considered not only in terms of human nutrition, such as bread corn and baking quality, malting barley and malting capacity, but also in terms of fodder, such as feed grains, green forage or protein feed obtained from turnip rape after oil pressing. Sulphur deficiency thus has multiple consequences for industries using cultivated plant crops as a raw material. As drawbacks in raw material production, e.g. cultivation, are observed and eliminated, raw material production becomes easier to control and crop yield and quality production predictions improve, and this is useful for the users of the raw material. In addition, high-quality raw materials necessarily increase the efficiency of industrial processes and also of domestic animal production.

EP813807 discloses a method for nitrogen fertilization of soil for cultivated plants wherein the fertilizer is spead over the cultivated area in conjunction with the sowing of cultivated plants. Together with the cultivation a reference cultivation area (fertilizer window) is established with maximum crop corresponding to maximum amount of fertilizer used. Later, during the growing season more fertilizer is spread over the cultivated area based on comparison measurements on these simultaneously cultivated areas with initial and high fertilization amount. This method is efficient for determining additional need for nitrogen, but not suitable for sulphur optimization. Further, major drawbacks are that the need for establishing and measuring fertilizer window(s) in each field is laborious, and that the accuracy of the comparisons in e.g. larger farms and/or varying field soil or for unexpected nutrient balance due to external factors, such as weather, should be better.

On principle, the fertiliser industry is perfectly prepared for producing artificial fertilisers richer in sulphur. A conceivable option would involve a shift from chlorine-based fertilisers to sulphate-based fertilisers, yet such fertilisers are a cost issue for cultivators, because sulphate-based fertilisers are indisputably more expensive. To encourage cultivators in Finland and the Baltic countries to use fertilisers richer in sulphur in the future, the usefulness of such fertilisers should first be proved. Only in situations where a cultivator can state that the additional investment increases the value of his production e.g. in terms of crop quantity and quality, can he be convinced of the profitability of such an investment. Sulphur that is not utilised by the plants tends to be washed away, especially from coarse mineral soils with a low decomposition degree, whereas it is relatively easily retained in clay.

Thus, crucial issues in this connection are timely sulphur fertilisation and fertilisation with a sulphurous fertiliser only at sites that clearly suffer from sulphur deficiency during the plant growing season. The problem is actually how to obtain reliable information about the timing, localisation and amount of required sulphur fertilisation. The applicant's FI patent 107368B discloses a method for optimal nitrogen fertilisation of cultivated plants with a view to optimised crop amount and quality by means of a bio-indicator, such as protein or amino acid, for instance. This allowed determination of the nitrogen fertilisation requirement and spreading of a nitrogen-containing fertiliser in the required optimal amount during or after sowing. This procedure is impossible regarding sulphur, because there is no equivalent direct indicator for measuring its content, the absolute value as such not being equally descriptive.

The applicant's previous patent application FI 20021199 discloses a method for determining factors that restrict agricultural production locally or geographically and for evaluating their mutual impact by means of an expert system. The application also describes this computer or computer network-aided system, in which feedback was given as a solution over the data network for further courses of action. This was done with the purpose to identify the central limiting factors, using several different sources of information, with the focus on defining the significance and the use of the expert system as an instrument.

US patent 5566069 describes a data network for collecting and analysing agronomic data. It focuses on data storage under field conditions and on further processing *in situ.* It also mentions the possibility of providing analyses for use by cultivators, without specifying them in further detail. In the practice, surveying is difficult due to time and work-consuming sampling, which tends to be confined to restricted local data collection.

Sulphur deficiency in plants can be observed by various methods, either generally by monitoring crop deviations, e.g. by utilising air photographs, or specifically by determining the sulphur content either in the soil or directly in the plants. In analysing plant samples, the meters may comprise e.g. the total sulphur amount, the sulphate content, or the glutation variation in the course of the growing period. Determination of the ratio malate:sulphate has proved particularly useful, as has been described in the publication Blake-Kalff, M. et al. 2002, Sulphur Deficiency Diagnosis using Plant Tissue Analysis. The Proceedings no. 503, International Fertiliser Society, York, UK, 1-24. In this method, a leaf sample representing a field is taken for the first time before the start of straw growth (growth degree 22-27) or before the rosette stage of oil seed rape and turnip rape, from young leaves, in which sulphur deficiency appears initially. The sample is dried either in an oven or e.g. between kitchen paper before the actual analysis. The analysis proper must be carried out at a laboratory where an ion chromatographic analysing apparatus is available. If there appears no deficiency in the first sampling, it is advisable to renew the sampling at the straw growth stage of the grains and at the rosette stage of oil plants. The method involves the problem of requiring analyses separately for each field, at a crucial location, and what is more, by repeated sampling. Especially the need of drying the sample and delivering it to a laboratory having professional analysis skill, the actual analysis and returning information together with sulphur fertiliser recommendations, slow down the cultivator's access to information substantially, while sulphur deficiency as such may already have caused losses in terms of crop yield and quality. On the other hand, in cases where there is no sulphur deficiency, a sample has been analysed mainly for the sake of safety, so that the cost of analysis deteriorates the profit obtained from the crop yield of a field.

The purpose of the present invention is bringing the amount of sulphur in a soil necessary for the plants to a level that is beneficial for the plants before the beginning of the growing period and maintaining a sulphur amount beneficial for the plant over the growing period. An additional purpose is to reduce the need of unnecessary sulphur analyses and to avoid excessive sulphur fertilisation.

It has now been found that year-round monitoring, i.e. during the growing season and the period between growing seasons, development of the time and site-specific sulphur balance suitable for the plant to be cultivated and utilisation of these data in the determination of the sulphur amount usable by the plant allow, if necessary, a highly specified recommendation of additional sulphur fertilisation of plants suffering from sulphur deficiency.

The method of the invention is characterised by the features defined in the independent claims.

In the method of the invention, time and site-specific, typically public data are collected, allowing determination of the amount of sulphur usable by the plant at each location at a given moment and for a given type of plant to be cultivated.

In this context, growing period may imply the period over which the cultivated plant is at the growing stage and needs nutrients, such as sulphur, in its growth substrate. Intermediate period, again, may imply the period comprised between two growing periods, during which the plant does not require sulphur from the soil. Depending on the environment conditions, a cropping year may include several growing and/or intermediate periods; thus, for instance, there may be two crop yields per year in the Mediterranean countries, such as Spain.

In this context, target crop yield may imply the amount of crop equalling the cultivators' individual target crop yield under optimal conditions, or an estimate based on the profit of the growth during the previous growing period.

In accordance with the invention, the target crop allows an estimate of the amount of sulphur required for the cultivated plant under consideration. The amount of sulphur usable by the plant can be calculated e.g. by considering the changes caused by environmental conditions in the course of the growing period.

Before the beginning of the growing period, at the end of an intermediate period, the demand for supplementary sulphur can be estimated either on the basis of the previous intermediate period, or by calculating the changes occurred in the sulphur balance during the intermediate period. The balance provides the amount of possibly required additional sulphur, which can be given as a recommendation to the cultivator, before he starts sowing fertilisation, for instance.

During the growing period, it is necessary to compare an earlier estimate of the sulphur amount with the actual situation, allowing as effective reactions as possible to deviations from the estimated amount of sulphur usable by the plants. If a deviation is negative, i.e. there is sulphur deficiency, a verifying measurement can be made directly on the cultivated plant, if necessary. If sulphur deficiency has been ascertained, a recommendation of additional sulphur fertilisation is given to the cultivator, based on the magnitude of deviation.

Determination of the amount of sulphur usable by the plants of the invention requires information about time and site-specific factors affecting the sulphur balance. Such factors may comprise e.g. sulphur data, such as sulphur deposit data, meteorological data, such as information about weather conditions, and soil information, such as information about soil properties. Site data are also needed for site adaptation. All the data are collected as a function of time as well.

The site data of the substrate of the invention comprises e.g. farm estate and culture plot identifying data, such as e.g. plot boundaries and coordinates, whereby site information is unambiguously defined.

As a source of information, one may use e.g. The Integrated Administrative and Control System of the European Union or public sources of information of agricultural administrative authorities in different states, such as e.g. departments of ministries of agriculture and forestry, such as information from the Centre of Statistics of the Ministry of Agriculture and Forestry of Finland, or data can be obtained directly from the cultivator.

The soil information of the embodiments of the invention is necessary for calculating a sulphur washout prediction. The soil type of each plot, such as mineral, clay or organic type of soil, can be identified e.g. on data delivered by the cultivators, by the registers of laboratories for soil analysis, such as Viljavuuspalvelu Oy in Finland (Fertility Service) or public soil registers, which are available e.g. from the Geological Research Centre in Finland. Typical Finnish types of soil include e.g. loam (He), clay loam (HeS), coarse silt (HHt), heavy clay (HsS), silt moraine (HtMr), silt clay (HtS) or medium fine sand (KHt), whose washout behaviour or water and sulphur compound permeability are known or have been modelled.

In addition, determination of the amount of sulphur usable by the plant of the invention requires time and site-specific sulphur data, which may be information about sulphur deposits, the influence of deposits on the sulphur content of the substrate, or the influence of the retention capacity or permeability of the substrate on the sulphur amount. The sulphur deposit can be determined e.g. over the entire European area, or with respect to only a number of individual countries. In Finland, deposit information is available from the Meteorological Office. Sulphur deposits can be monitored according to different models as a function of quantity and time, such as e.g. HIRLAM (Machenhauer, B.HIRLAM final Report, Copenhagen, December 1988). Part of this model has been described on the Internet. The following map is based on the data of this model or HILATAR (a regional scale grid model for the transport of sulphur and nitrogen compounds. Part of the report Finnish Meteorological Institute Contributions No 21).

The sulphur deposit can be optionally determined simply by e.g. measuring the rainfall by means of an ordinary pluviometer and by analysing the sulphur or sulphate content of the water collected in the gauge. If necessary, these data can also be interpolated to locations between the measurement stations.

The interaction between rainfall, deposit and washout can further and optionally be monitored e.g. by measuring these variables more than once a month or e.g. by simulating this particular system with mathematic models for simulating the ground-plant-atmosphere system.

To establish the amount of sulphur, it is also necessary to collect time and site-specific regional meteorological data over corresponding periods, such as for instance the amount of rainfall and rain and temperature variations. These data allow the calculation of changes in the sulphur balance caused by meteorological data.

To determine the sulphur amount, the different data are combined with the site data of the substrate.

In a preferred embodiment of the invention, time and site-specific data can be processed by means of an expert system, which integrates e.g. a commercial planning system used at the production site of each specific farm, such as for instance the Finnish FarmitWisu, Agrineuvos, LORIS or the international Farm Works.

In a preferred embodiment, the site data of the substrate, e.g. the coordinate data, are formed into a site data record in the data bank of the expert system for site-specific monitoring, calculation, forecasting and realisation reports. In this manner, each data collected from different sources will be bound to the specific site by the coordinate data.

The expert system is a computer-based data processing program, which may consist of a site data system such as ARCMAP, which contains databases such as MS SQL, for instance. These allow various site data operations and the user may personally develop any necessary additional calculation routines in the system. The use of an expert system has the advantages of rapid processing and linking of large amounts of site and time data.

The data collected from different sources allow the determination of the amount of additional sulphur needed for the plant to be cultivated by subtracting the amount of sulphur (kg/ha) usable by the plant from the requirement calculated on the target crop yield.

The amount of sulphur usable by the plant is the cumulative sum of sulphur reaching the area under review and the sulphur leaving this area, to which is added the amount of sulphur (kg/ha) that is present in the area at the starting moment of the study and is typical and natural for the type of soil and usable by the plant.

The sulphur reaching the area is composed of a portion introduced by man (fertilisation), a portion made up of fallout from the air and of sulphur that is already present on the ground and is converted during the period under review from a form not usable by the plants to a form usable by the plants (mineralisation).

Sulphur is removed from the area by washout along with water.

The following example of calculating the additional sulphur requirement, i.e. of sulphur fertilisation, can be given:

The starting moment of the reference period can be freely chosen. The starting moment is defined as the moment at which the amount of sulphur in the soil usable by the plant is determined either by measuring, by using a mean value per type of soil (based on previous measurements) or by calculating (calculation described above). The reference period ends at the moment the crop whose sulphur fertilisation requirement is being calculated is harvested from the field. The reference period can be divided into two parts: real measured data about the components varying over the reference period are available (deposit, sulphur fertilisation, sulphur mineralisation, sulphur washout), or predicted data based on average historic data are available about these components. The reference period may start at the end of harvesting in August 2003 and end with the following harvest at the end of August 2004. Calculation is performed at the beginning of May 2004, so that real measured data are available for the period from the end of August 2003 to the end of April 2004, and evaluations based on historic data about the variable components are used for the period from the beginning of May 2004 to the end of August 2004.

If necessary, a recommendation of additional sulphur fertilisation can be given to the cultivator on the basis of the realised amount of sulphur if the deviation (deviation = evaluation - real value) is negative compared to the evaluated amount of sulphur.

The recommended fertilisation may be quantitative and/or qualitative. The amounts are typically indicated as kg/ha and the quality recommendation may comprise e.g. ammonium sulphate, sulphurous NPK mixed fertiliser or MgSO₄.

The method of the invention is usable for monitoring and eliminating sulphur deficiency of cultivated plants such as e.g. oil plants, preferably oil seed rape, turnip rape or sunflower or mustard or radish or pulses, preferably bean, pease or soy, or corn, preferably barley, oat, wheat or maize.

During the growing period, the amount of usable sulphur can be adjusted at given intervals, e.g. when a deviation from the evaluated amount of sulphur is observed e.g. on the basis of meteorological data, considering deviations caused by the environment, such as effects of precipitation and soil type on any sulphur washout, and also the effect of the temperature on sulphur release from the soil type. If the rainfall is greater than the set value, the proportion of washout increases, and if the temperature is greater than the set value, sulphur will be released in an amount greater than the set value. It is also possible to evaluate the amount of sulphur taken up by the plants during the growing season by using growth models based on meteorological data. However, the sulphur content in plants can typically be assumed to be constant in the balance calculation.

If the deviation proves to be negative during the growing period, samples of the plants can be taken from the area under review at the required moments for malate-sulphate determination, while any evaluated deviation from the sulphur content is verified.

In accordance with the examples of the invention, the cultivator can be given site and time-specific evaluations of the amount of sulphur usable by the plant, together with a recommendation of any possible sampling moment and location, in order to verify the calculated deviation. This avoids superfluous analyses of plant samples in areas where, during the growing period, the sulphur amount still equals the evaluation made before the growing period, and dystrophy is caused by some other factor than sulphur deficiency, such as e.g. want of water or nitrogen.

A recommendation of additional fertilisation is given in order to eliminate sulphur deficiency confirmed in a plant.

The cultivator can be given a recommendation about verifying a deviation and, if necessary, about additional fertilisation, one or more times during the growing period, depending on changes in the environmental conditions and their effects on the sulphur amount. In a preferred embodiment of the invention, a deviation indicated by the expert system regarding the real amount of sulphur usable by the plant compared to the evaluated sulphur amount is verified by a direct analysis of the cultivated plant using the malate-sulphate determination mentioned above or determination of the ratio nitrogen-sulphur in the leaves. Sulphur balance determination can be performed in a site data system, in which the sulphur fertilisation requirement is obtained at once for a very large number of field plots, when the starting data described above are fed with respect to all of the field plots. Optionally, calculation can be made with respect to several points within one single field plot, if the necessary starting data have been measured at several points within the field plot.

The efficiency of the present method becomes apparent particularly by the feature that the verifying measurements of the sulphur condition are now directed during the growing period to the probable deficiency areas, instead of the cultivators taking random samples many times from different fields in the course of the growing period in order to monitor the sulphur condition, as is suggested e.g. in the publication Blake-Kalff, M. et al. 2002, Sulphur Deficiency Diagnosis using Plant Tissue Analysis. The Proceedings No 503, International Fertiliser Society, York, UK. 1-24.

Initial measurement of the sulphur content in the soil may be necessary, however, as the monitoring proceeds, one can start utilising monitored and calculated data. This allows a calculation of an estimate of the sulphur amounts for the subsequent intermediate and/or growing season on the basis of the sulphur amounts of the previous growing period.

The following are examples of sulphur fertilisations performed in accordance with the invention, yet without confining the invention to these.

### Example 1.

Sulphur fertilisation was optimised plot-wise during the intermediate season preceding malting barley cultivation in Finland by utilising data fed into the expert system before the beginning of the growing period in 1997.

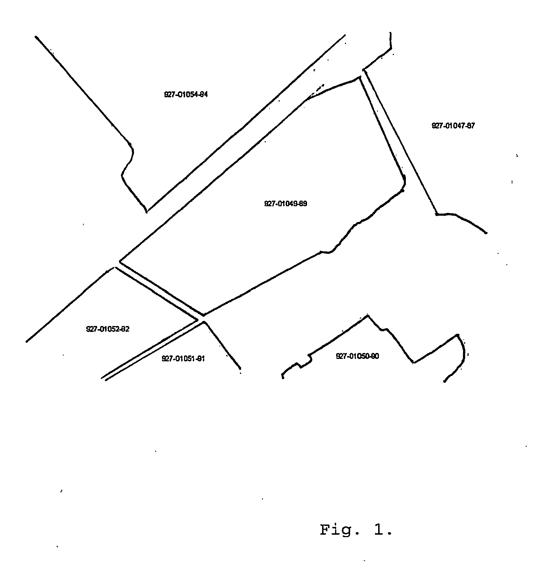

The basic data fed into the system comprised identifying data about farm and field plot data of 400 malting barley cultures provided by the cultivators. In addition, agricultural administrative authorities, the statistic centre of the Ministry of Agriculture and Forestry (TIKE) provided the plot boundaries and coordinates of the field plots (plot identifiers) in the form of digital map files, of which figure 1 illustrates an example.

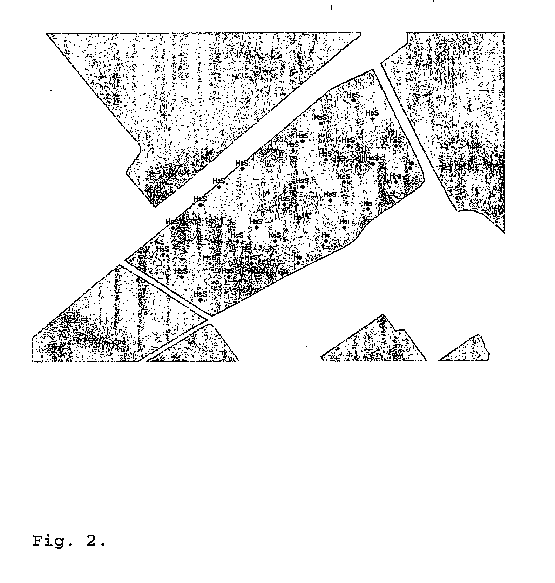

The type of soil of each field plot, such as mineral, clay or organic type of soil, was identified on the basis of data provided by the cultivators. The cultivators, in turn, obtained data about the type of soil by sending soil fertility analysis samples to the Fertility Service. Figure 2 gives an example of soil type data.

For all of the basic data, a site identifying code was given, such as plot identifier, plant species, type of soil, and these were combined in a site-specific data record. The basic data marked with a site identifying code were transferred to the site data bank of the expert system. Table 1 shows an example of a basic data record.

**Table 1.**

| Basic plot identifier | Plant species | Type of soil | Soil type area within the plot |
|---|---|---|---|
| | | | ha |
| 9270104989 | Barley | HsS | 3.5 |
| 9270104989 | Barley | He | 1.1 |
| 9270104989 | Barley | HeS | 1.1 |
| 9270104989 | Barley | HHt | 0.2 |

Monthly meteorological data were collected during the intermediate period between the previous harvest and the new starting growing period. The collected data included site-specific regional meteorological data about the precipitation amount and data about the average air temperature.

Sulphur deposit data were collected monthly during the intermediate period. The calculation of the sulphur deposits had been made with respect to quantity and time by measuring the rainfall and the sulphur content of rain water. The measurements of exemplifying plot 9270104989 are shown in table 2.

The sulphur deposit data and the meteorological data were combined with the site identifying data in a place and time-specific data record.

**Table 2.**

| Basic plot identifier | Month | Average temperature, °C | Rainfall, mm | Sulphur deposit, kg/ha |
|---|---|---|---|---|
| 9270104989 | September | 8.8 | 44 | 0.28 |
| 9270104989 | October | 6.8 | 77 | 0.70 |
| 9270104989 | November | 3.4 | 216 | 1.62 |
| 9270104989 | December | - 5.1 | 39 | 0,56 |
| 9270104989 | January | - 4.1 | 43 | 0.30 |
| 9270104989 | February | - 3.3 | 66 | 0.52 |
| 9270104989 | March | 0.0 | 26 | 0.54 |
| 9270104989 | April | 2.0 | 32 | 0.15 |

The sulphur deposit and meteorological data marked with a site identifying code were transferred from the plot-specific data record to the site data bank of the system.

Then the regional sulphur amount in the soil usable by the plant was determined during the intermediate period, before the sowing fertilisation made at the beginning of the growing period. The sulphur deposit amount was corrected on the basis of meteorological data by subtracting the portion (washout) possibly caused by sulphur washout under the effect of precipitation and soil type (deposit) and by adding on the other hand the sulphur amount released in the soil type (mineralisation) under the effect of temperature and as a result of microbe activity:

Sulphur amount usable by the plant = deposit - washout + mineralisation

According to soil type data from the field (table 1) the most common field soil type HsS is capable of retaining water usable by plants at a rate of about 15% of its volume (Webb, R.S., C.E. Rosenweig and E.R.Levine.1993. Specifying Land Surface Characteristics in General Circulation Models: Soil Profile Data Set and Derived Water Holding Capacities. Global Biogeochemical Cycles 7(1):97-108).

A calculation of the average site was made separately for soil types in the plot. When the previous crop was harvested in 1996, half of the available volume was in use. Before the earth froze (during September, October and November), the rainfall was 337 mm, so that a topsoil layer with a thickness of 1 metre (the thickness of cultivated soil is considered to equal the earth layer on top of drains at a depth of 1 metre) bound a portion of that quantity, with the remainder, i.e. 337 - 150 * 0.5 = 262 mm (78% of the rainfall) being drained from the fields by the drains. The water entrained nearly the same portion of sulphur deposit that was already present in the soil (2 kg/ha) and that had reached the soil during the same period (2.6 kg/ha), i.e. 3.2 kg/ha.

The major portion of the sulphur deposit formed when the earth was frozen over the period December - April was washed out from the field, since the earth was full of water in the spring as the earth melted, and the sulphate sulphur that is readily entrained by water was not retained in the soil. It is commonly known that only 10%, i.e. 0.2 kg/ha of the winter deposit remained in the field, and it was not released from the natural earth reserves when the earth was cold or frozen in the autumn, winter and spring until May, when the field was sowed and fertilised.

In May water already evaporates from the ground and the sulphur deposit brought by new rainfall can be retained in the field more effectively. At the time of the previous harvest, sulphur usable by the plants remained in the soil only at a rate of 2 kg/ha, and it is hardly at all released from the natural earth reserves when the earth is cold or even frozen in the autumn and spring.

Consequently, these data allowed a sulphur balance to be formed for the field plot, the sulphur balance being subsequently employed in the planning of the intermediate season sulphur fertilisation of malted barley growing on the plot during the growing season 1997 (table 3).

**Table 3.**

| Key | Sulphur balance, kg/ha |
|---|---|
| In the soil after the previous growing period | 2 |
| Deposit in the field in the autumn, before the earth was frozen | 2.6 |
| Sulphur washed out in the autumn | - 3.2 |
| Winter deposit remaining in the field | 0.2 |
| Sulphur released from the soil during the summer (estimate) | 5 |
| Sulphur balance of malted barley with a target yield of 4,000 kg/ha | -16 |
| Required fertilisation (if the balance is negative) | -9.4 |

The total amount of required sulphur was thus determined on the basis of the sulphur amount obtained before the new crop was founded.

On the basis of the sulphur balance determination, the farm to which the field plot under review belonged was given a recommendation of sulphur fertilisation of the fields in accordance with the sulphur requirement calculated by means of the expert system in the site databank. The recommendation for the most frequent soil type in the plot comprised 9.4 kg of sulphur/ha, i.e. 470 kg of fertiliser containing 2% of sulphur.

The sulphur balance was determined for the entire area under review in the site data system, in which the sulphur fertilisation requirement was determined at once for a very large number of field plots, providing that the starting data described for one field plot in this example had been fed for all of the field plots.

### Example 2.

The sulphur fertilisation requirement was monitored during the growing period in accordance with the estimates obtained by the expert system regarding the plot of example 1 (table 1).

The adequacy of the sulphur requirement for the crop potential was calculated at the end of June 1997. Factors causing deviations in the balance included the target yield, rainfall, amount of sulphur released from the soil and sulphur deposit.

At that stage of the growing period, the cultivator estimated the crop potential to 5,000 kg/ha, i.e. slightly above the estimate for which the fertilisation had been planned in the spring (4,000 kg/ha). In other words, a higher crop level required sulphur in a calculated amount by 4 kg/ha larger than the amount spread during the sowing fertilisation in the spring.

The average temperature during the period May - June (12.4 °C) was close to the estimated normal temperature (12.2 °C), in other words, the deviation was very small, and so an update of the estimate of released sulphur was not called for.

However, over the period May - June, the sulphur deposit had been only half of the normal deposit. With a sulphur deposit of 2 kg/ha according to the estimated situation during the barley-growing period, the sulphur fertilisation had to be increased by 1 kg/ha because of the difference between the real deposit and the evaluated deposit.

The measured rainfall was 81 mm less than the estimated evaporation during the period May - June, so that the rain water remained in the field instead of being drained along the drains. Consequently, there was no sulphur washout during that period.

In accordance with a calculation made by means of the expert system, the sulphur fertilisation required a total increase of 5 kg/ha.

This is a marked deviation, and it was decided to make a sulphur analysis of the crop on the plot by determining the nitrogen content of the plant and comparing it with its sulphur content. These analyses confirmed that the crop suffered from sulphur deficiency, because the ratio nitrogen - sulphur was above 20 in all of the samples. In the case of barley, values above 15 are considered to belong to the group vulnerable to deficiency.

At the beginning of July, the cultivator was advised to perform magnesium sulphate spray application in order to compensate for sulphur deficiency and to avoid that sulphur deficiency deteriorate the barley quality and decrease the crop yield. The recommendation involved spray application of magnesium sulphate at a rate of 38 kg/ha with the target sulphur yield of 5 kg/ha. In this case, the fertilisation was carried out as equal fertilisation, i.e. with the same amount of fertiliser applied at every location of the field plot.

### Example 3.

During the growing period 2000, the adequacy of the sulphur fertilisation carried out during the intermediate season preceding the growing season was monitored on 659 barley plots.

At the end of June, the following data regarding the period May - June according to example 2 were collected in the site data system: air temperature, rainfall, sulphur deposit and the cultivators' crop estimate per plot based on the growing conditions in early summer.

Based on this information, the sulphur balance calculation in example 2 was revised with respect to the following data: crop estimate - > sulphur amount required for the crop yield, air temperature - > amount of sulphur released from the soil, rainfall - > sulphur washout, sulphur deposit - > amount of sulphur fallout from the air available to the plants.

The monitoring revealed the plants in the field plot for which the sulphur requirement as determined before sowing had been too low compared to the new situation and whose growth was obviously retarded by sulphur deficiency.

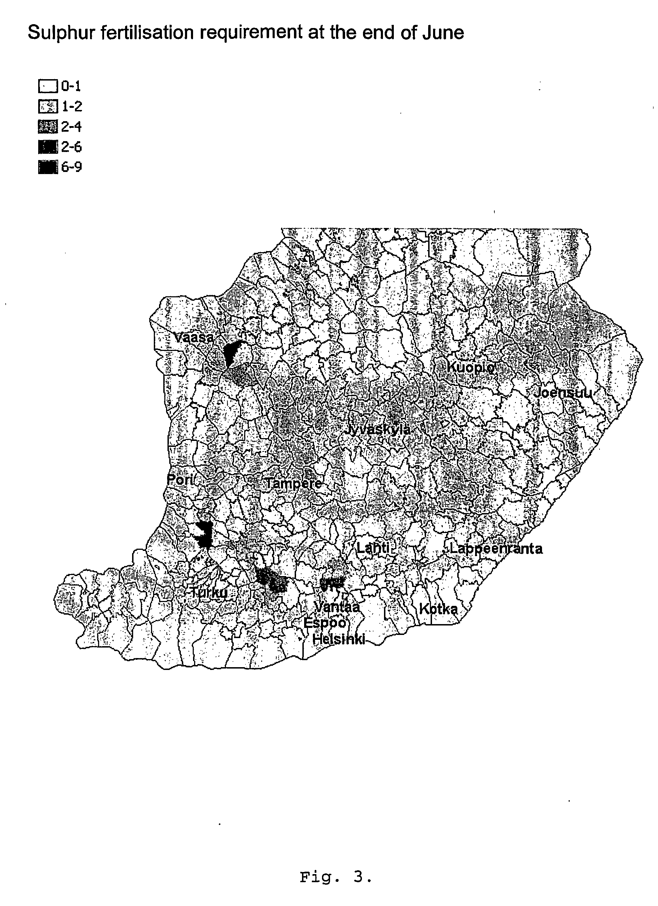

The monitoring indicated that the risk of sulphur deficiency was high in certain areas (figure 3: darkened areas). These areas comprised a total of 28 barley plots under review. The situation was verified on these 28 plots that seemed to require additional sulphur (negative sulphur balance) by means of crop samples and by analysing the sulphur adequacy for optimal growth on these samples.

The sulphur situation of the plant was analysed by determining the ratio of nitrogen to sulphur in the leaves of the plant. The ratio of nitrogen content to sulphur content in the leaves was 20 in all of the samples. Consequently, the samples confirmed sulphur deficiency in these particular plots, and the cultivators were given a sulphur fertiliser recommendation. The recommendation was calculated for each plot in the site data system while the data from early summer were updated in the manner described in example 2.

## Claims

1. A method for optimal sulphur fertilisation of cultivated plants, **characterised in that** during a cultivation year comprising one or more growing periods and/or intermediate periods the following steps are taken time- and site-specifically at least once:
a. determining an additional sulphur requirement by means of a target crop yield and a sulphur balance before beginning of the growing period and giving a recommendation for possible additional fertilisation,
b. estimating the sulphur requirement by means of the target crop yield at the beginning of the growing period and determining a deviation from the estimate caused by environmental conditions during the growing period,
c. if the deviation is negative, verifying experimentally a sulphur deficiency in the cultivated plant during the growing period,
d. if the deviation is negative, giving a recommendation for the additional sulphur fertilisation,
wherein the sulphur data required for determining the additional sulphur requirement and for calculating the sulphur balance comprises calculated joint effect of sulphur amount entrained by a rain water, a decrease in the sulphur amount caused by washout and decrease in the sulphur amount caused by soil permeability.

2. A method according to claim 1, **characterised in that** collecting for calculating the sulphur balance and for determining the additional sulphur requirement, time and site-specific data about factors influencing the sulphur balance, preferably sulphur, meteorological and soil data.

3. A method according to claim 2, **characterised in that** the meteorological data comprises rainfall amount and temperature.

4. A method according to claim 2, **characterised in that** the soil data comprises retention capacity or permeability of the type of soil with respect to water and/or sulphur compounds.

5. A method according to claim 1, **characterised in that** the time and site-specific additional sulphur requirement is the sulphur requirement calculated on the target crop yield, from which an amount of sulphur usable by the plant has been subtracted, this sulphur amount being obtained from amounts of sulphur entering and leaving the balance area, to which the sulphur amount (kg/ha) already present in the area and usable by the plant is added.

6. A method according to claim 2, **characterised in** the time and site-specific data are stored for processing in an expert system.

7. A method according to claim 1, **characterised in that** the target crop yield of the cultivated plant equals cultivator's individual target crop yield under optimal conditions or an estimate based on crop coverage during previous growing period.

8. A method according to claim 1, **characterised in that** the additional sulphur fertilisation preceding the beginning of the growing period is carried out in connection with sowing fertilisation or at the initial growth stage during first top soil fertilisation.

9. A method according to claim 1, **characterised in that** the cultivated plant is an oil plant, preferably oil seed rape, turnip rape or sunflower, or mustard, or radish, or pulses, preferably bean, pease or soy, or corn, preferably barley, oat, wheat or maize.

10. A method according to claim 1, **characterised in that** experimental verification is performed by measuring the sulphur content directly in the cultivated plant, using preferably a malate-sulphate test.

11. A method according to claim 1, **characterised in that** the recommendation of the additional fertilisation can be quantitative and/or qualitative, relating preferably to ammonium sulphate, a sulphurous NPK mixed fertiliser or MgSO₄.

12. A method according to claim 1, **characterised in that** the fertiliser recommendation is given if the deviation magnitude is above 0.5 kg/ha.

13. A method according to claim 1, **characterised in that** the steps a-d in claim 1 are taken 1-10 times during the year.

14. A system for calculating the time and site-specific additional sulphur requirement of claim 1, with the starting data comprising measured and monitored sulphur data, meteorological data, soil data and the target crop yields.

## Patentansprüche

1. Verfahren zur optimalen Schwefeldüngung von Kulturpflanzen, **dadurch gekennzeichnet, dass** während eines Anbaujahres, das eine oder mehrere Wachstumsperioden und/oder Zwischenperioden umfasst, die folgenden Schritte zeit- und ortsspezifisch mindestens einmal ergriffen werden:
a. Bestimmung des zusätzlichen Schwefelbedarfs mit Hilfe eines Soll-Ernteertrages und der Schwefelbilanz vor dem Beginn der Wachstumsperiode und Abgabe einer Empfehlung für eine mögliche zusätzliche Düngung,
b. Abschätzung des Schwefelbedarfs mit Hilfe des Soll-Ernteertrages zu Beginn der Wachstumsperiode und Bestimmung der durch Umweltbedingungen während der Wachstumsphase verursachten Abweichung von der Abschätzung,
c. experimentelle Überprüfung des Schwefelmangels in der Kulturpflanze während der Wachstumsperiode, falls die Abweichung negativ ist,
d. Abgabe einer Empfehlung für die zusätzliche Schwefeldüngung, falls die Abweichung negativ ist,
worin die für die Bestimmung des zusätzlichen Schwefelbedarfs und für die Berechnung der Schwefelbilanz benötigten Schwefeldaten den berechneten gemeinsamen Effekt der durch Regenwasser mitgenommenen Schwefelmenge, der durch Auswaschung verursachten Abnahme der Schwefelmenge und der durch Bodendurchlässigkeit verursachten Abnahme der Schwefelmenge umfassen.

2. Verfahren gemäß Anspruch 1, **dadurch gekennzeichnet, dass** für die Berechnung der Schwefelbilanz und für die Bestimmung des zusätzlichen Schwefelbedarfs zeit- und ortsspezifische Daten über die Schwefelbilanz beeinflussende Faktoren, vorzugsweise Daten über Schwefel, meteorologische Daten und Bodendaten gesammelt werden.

3. Verfahren gemäß Anspruch 2, **dadurch gekennzeichnet, dass** die meteorologischen Daten die Niederschlagsmenge und Temperatur umfassen.

4. Verfahren gemäß Anspruch 2, **dadurch gekennzeichnet, dass** die Bodendaten die Retentionskapazität oder Permeabilität des Bodentyps hinsichtlich Wasser und/oder Schwefelverbindungen umfassen.

5. Verfahren gemäß Anspruch 1, **dadurch gekennzeichnet, dass** der zeit- und ortsspezifische zusätzliche Schwefelbedarf der für den Soll-Ernteertrag berechnete Schwefelbedarf ist, von dem die durch die Pflanze nutzbare Schwefelmenge subtrahiert worden ist, diese Schwefelmenge wird von den in die Bilanzfläche eingebrachten und ausgebrachten Schwefelmengen erhalten, zu denen die bereits auf der Fläche vorhandene und durch die Pflanze nutzbare Schwefelmenge (kg/ha) addiert wird.

6. Verfahren gemäß Anspruch 2, **dadurch gekennzeichnet, dass** die zeit- und ortsspezifischen Daten zur Verarbeitung in einem Expertensystem gespeichert werden.

7. Verfahren gemäß Anspruch 1, **dadurch gekennzeichnet, dass** der Soll-Ernteertrag der Kulturpflanze dem individuellen Soll-Ernteertrag des Landwirts unter optimalen Bedingungen oder einer auf einer Ernteerhebung vorheriger Wachstumsperioden basierten Schätzung gleich kommt.

8. Verfahren gemäß Anspruch 1, **dadurch gekennzeichnet, dass** die zusätzliche Schwefeldüngung, die dem Beginn der Wachstumsperiode vorausgeht, in Verbindung mit der Saatdüngung oder zur anfänglichen Wachstumsphase während der ersten Düngung der obersten Bodenschicht ausgeführt wird.

9. Verfahren gemäß Anspruch 1, **dadurch gekennzeichnet, dass** die Nutzpflanze eine Ölpflanze, vorzugsweise Ölsamenraps, Rübsen oder Sonnenblume, oder Senf, oder Rettich, oder Hülsenfrüchte, vorzugsweise Bohnen, Erbsen oder Soja, oder Getreide, vorzugsweise Gerste, Hafer, Weizen oder Mais ist.

10. Verfahren gemäß Anspruch 1, **dadurch gekennzeichnet, dass** die experimentelle Überprüfung durch Messung des Schwefelgehalts direkt in der Nutzpflanze unter Verwendung von vorzugsweise einem Malat-Sulfat-Test durchgeführt wird.

11. Verfahren gemäß Anspruch 1, **dadurch gekennzeichnet, dass** die Empfehlung für die zusätzliche Düngung quantitativ und/oder qualitativ sein kann bezüglich vorzugsweise Ammoniumsulfat, eines schwefelhaltigen NPK-Mischdüngers oder MgSO₄.

12. Verfahren gemäß Anspruch 1, **dadurch gekennzeichnet, dass** die Düngeempfehlung abgegeben wird, falls die Größenordnung der Abweichung über 0,5 kg/ha liegt.

13. Verfahren gemäß Anspruch 1, **dadurch gekennzeichnet, dass** die Schritte a bis d in Anspruch 1 1- bis 10-mal während des Jahres ergriffen werden.

14. System zur Berechnung des zeit- und ortsspezifischen zusätzlichen Schwefelbedarfs gemäß Anspruch 1 mit Anfangsdaten, welche die gemessenen und überwachten Schwefeldaten, meteorologischen Daten, Bodendaten und die Soll-Ernteerträge umfassen.

## Revendications

1. Procédé de fertilisation au soufre optimale de plantes cultivées, **caractérisé en ce que**, durant une année de culture comprenant une ou plusieurs périodes de croissance et/ou périodes intermédiaires, les étapes suivantes sont effectuées en fonction de la période et du site au moins une fois :
a. détermination d'un besoin en soufre supplémentaire au moyen d'un rendement de récolte cible et de l'équilibre en soufre avant le début de la période de croissance, et indication d'une recommandation pour une fertilisation additionnelle possible,
b. estimation d'un besoin en soufre au moyen du rendement de récolte cible au début de la période de croissance, et détermination d'un écart par rapport à l'estimation du fait de conditions environnementales durant la période de croissance,
c. si l'écart est négatif, vérification de manière expérimentale d'une insuffisance en soufre dans la plante cultivée durant la période de croissance,
d. si l'écart est négatif, indication d'une recommandation pour la fertilisation au soufre additionnelle,
dans lequel les données sur le soufre requises pour déterminer le besoin en soufre additionnel et pour calculer l'équilibre en soufre comprennent l'effet joint calculé de la quantité de soufre entraîné par l'eau de pluie, d'une diminution de la quantité de soufre due au lavage, et d'une diminution de la quantité de soufre due à la perméabilité du sol.

2. Procédé selon la revendication 1, **caractérisé par** la collecte, pour calculer l'équilibre en soufre et pour déterminer le besoin en soufre supplémentaire, de données spécifiques de la période et du site concernant des facteurs influençant l'équilibre en soufre, de préférence de données concernant le soufre, la météorologie et le sol.

3. Procédé selon la revendication 2, **caractérisé en ce que** les données météorologiques comprennent la quantité des précipitations et la température.

4. Procédé selon la revendication 2, **caractérisé en ce que** les données de sol comprennent la capacité de rétention ou la perméabilité du type de sol vis-à-vis de l'eau et/ou de composés soufrés.

5. Procédé selon la revendication 1, **caractérisé en ce que** le besoin en soufre supplémentaire spécifique du moment et du site est le besoin en soufre calculé sur le rendement de récolte cible, duquel la quantité de soufre utilisable par la plante a été soustraite, cette quantité de soufre étant obtenue à partir des quantités de soufre entrant dans et sortant de la zone de balance, auxquelles la quantité de soufre (kg/ha) déjà présente dans la zone et utilisable par la plante est ajoutée.

6. Procédé selon la revendication 2, **caractérisé en ce que** les données spécifiques du moment et du site sont mémorisées pour être traitées dans un système expert.

7. Procédé selon la revendication 1, **caractérisé en ce que** le rendement de récolte cible de la plante cultivée est égal au rendement de récolte cible individuelle du cultivateur dans des conditions optimales ou à une estimation basée sur la couverture de récolte durant une période de croissance précédente.

8. Procédé selon la revendication 1, **caractérisée en ce que** la fertilisation au soufre supplémentaire précédant le début de la période de croissance est effectuée en relation avec la fertilisation au cours des semailles ou lors du stade de croissance initial durant la première fertilisation du sol supérieur.

9. Procédé selon la revendication 1, **caractérisé en ce que** la plante cultivée est une plante oléagineuse, de préférence le colza à huile, le colza ou le tournesol, ou la moutarde, ou le radis, ou les légumineuses, de préférence le haricot, le pois ou le soja, ou une céréale, de préférence l'orge, l'avoine, le blé ou le maïs.

10. Procédé selon la revendication 1, **caractérisé en ce que** la vérification expérimentale est effectuée par mesure de la teneur en soufre directement dans la plante cultivée, au moyen de préférence d'un test au malate-sulfate.

11. Procédé selon la revendication 1, **caractérisé en ce que** la recommandation d'une fertilisation supplémentaire peut être quantitative et/ou qualitative, en concernant de préférence le sulfate d'ammonium, un fertilisant mixte NPK sulfureux ou le MgSO₄.

12. Procédé selon la revendication 1, **caractérisé en ce que** la recommandation en fertilisant est donnée si l'amplitude de l'écart est supérieure à 0,5 kg/ha.

13. Procédé selon la revendication 1, **caractérisé en ce que** les étapes a-d de la revendication 1 sont effectuées 1 à 10 fois durant l'année.

14. Système pour calculer le besoin en soufre supplémentaire spécifique du moment et du site selon la revendication 1, les données de départ comprenant des données sur le soufre mesurées et surveillées, des données météorologiques, des données sur le sol et les rendements de récolte cible.
